# EUROPEAN PATENT SPECIFICATION

(11) **EP 1 464 266 B1**
(45) Date of publication and mention of the grant of the patent: **20.06.2007**
(21) Application number: 04425228.6
(22) Date of filing: 31.03.2004
(51) Int. Cl.: A47L 9/20

(54) **A filter-shaking device for a suction cleaner**
Eine Filterschütteleinrichtung für einen Staubsauger
Un appareil pour secouer le filtre d'un aspirateur

(30) Priority: 02.04.2003 IT CR20030003
(43) Date of publication of application: 06.10.2004
(73) Proprietor: Solarys S.r.L., 26100 Cremona (IT)
(72) Inventor: Bettella, Giancarlo, 26100 Cremona (IT)
(74) Representative: Mascioli, Alessandro

(56) References cited:
- US-A- 3 387 538
- US-A- 4 246 011
- US-A- 4 719 662
- US-A- 5 603 740
- US-A- 5 951 746

## Description

The present invention concerns a pneumatic filter-shaking device for vacuum cleaners that is particularly applicable to industrial vacuum cleaners.

One of the problems of industrial vacuum cleaners is the rapid blocking of the internal filter, necessitating frequent interventions for removing the solid deposits from the filter and regaining, at least in part, its effectiveness.

To overcome this problem some vacuum cleaners are provided with a manually operated filter-shaking device, essentially comprising a handle connected to the filter by a rigid rod, generally placed on the top of the filter chamber.

These manual filter-shaking devices are very simple but they are not very practical to use and are barely effective since they depend on the diligence of the operator assigned to regular filter cleaning.

Electrical filter-shaking devices that work partially or completely automatically are also known. These are more efficient than the manual versions but are rather complicated, costly and space consuming due to the presence of a motor, mechanical connections to the filter and electrical or electronic control devices, etc...

US-A-4246011 discloses a filter cleaning device for a vaccum cleaner enabling filter cleaning in situ. A filter cleaning brush is movable when a preset pressure differential is applied to a piston-cylinder arrangement.

The aim of the present invention is to eliminate these disadvantages with a particularly efficient and practical pneumatic filter-shaking device that is economic, small and easy to install in any kind of vacuum cleaner.

More precisely, the aim of the invention is to realize a filter-shaking device that does not require an electric motor, nor any other electrical or electronic components, complicated connections or mechanical transmissions, thus resulting in extreme simplicity, economy and reliability.

The aims are achieved with the present invention as characterised by the claims and consisting of a pneumatic filter-shaking device for a filter of a vacuum cleaner, characterised in that it comprises a sleeve, connectable to means for supplying a compressed air flow and fitted with at least one air discharge vent, and a piston sliding inside said sleeve, connected to elastic return means and provided with a shank extending beyond the end of said sleeve, wherein said piston, when moving with a reciprocating motion inside said sleeve, causes the opening and closing of said at least one air discharge vent and also causes the shaking of the filter through said shank.

It is preferable to connect the sleeve directly to a compressed air delivery hose of the motor-vacuum pump unit of the vacuum cleaner.

The main advantage of the invention is that the device enables effective shaking of the filter, better than what is normally obtainable with manual devices, being at the same time much simpler and economical than the automatically operated devices already known.

The device according to the invention is very small and therefore easy to install on various models of vacuum cleaner.

A further advantage is obtained in that the device is also very reliable due to its simple construction and small number of components.

Yet another advantage is that operation does not require motors or other electrical components, thus making the device suitable for vacuum cleaners designed for use in explosion risk environments, where no electrical device can be used for reasons of safety.

The advantages of the invention will appear evident in the following figures which provide an embodiment thereof, illustrated as a non-limiting example, where:
Fig. 1 illustrates schematically and in axial section a pneumatic filter-shaking device for vacuum cleaners in accordance with the invention;
Fig. 2 illustrates a section according to plane II-II of Fig. 1;
Fig. 3 illustrates the device of Fig. 1, applied to a vacuum cleaner unit suitable for use in industrial vacuum cleaners;
Figs. 4a and 4b illustrate schematically two working positions of the device in Fig. 1, and
Figs. 5a and 5b illustrate, schematically, the device of Fig. 1 connected to a deactivation system, that is shown in two positions corresponding to the filter-shaking device enabled and disabled.

Referring now to the details of the figures, the invention relates to a pneumatic filter-shaking device 1, applicable to a vacuum cleaner, particularly of the industrial type, provided with at least one filter F.

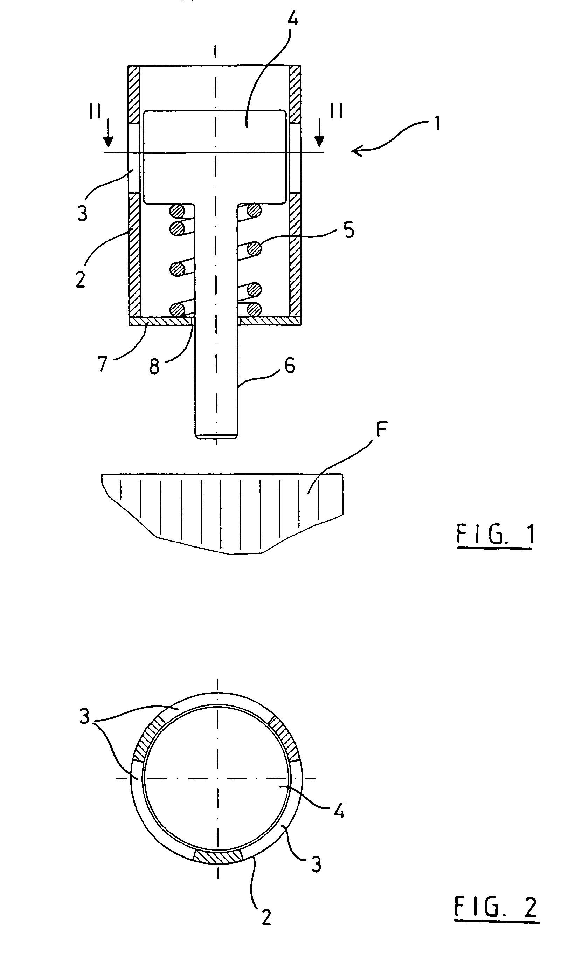

The device 1 comprises a sleeve 2 which is connectable to means for supplying a compressed air flow A, and is provided on its lateral surface with at least one air discharge vent 3. In the example illustrated, as can be seen in Fig. 2, the sleeve 2 is provided with three lateral air discharge vents.

The device 1 further comprises a piston 4 sliding inside the sleeve 2 and provided with a shank 6 extending beyond the end of said sleeve 2. The piston is joined to elastic return means, advantageously a spring 5 coaxial to the shank 6.

Seats for said spring 5 are provided by the head of the piston itself which is joined to the shank 6, and by a bottom element 7, fixed to the bottom end of the sleeve 2 and provided with a hole 8 to allow the passage of the shank 6.

The head of the piston 4 is sliding with a small clearance inside said sleeve 2, so that the reciprocating motion of the piston 4 causes the opening and closing, in a substantially tight manner, of the air vents 3.

The piston 4 is also adapted to cause the shaking of the filter F through its shank 6 which, for this purpose, has an end that comes into contact with said filter or is connected to it in some other equivalent way.

The sleeve 2 is advantageously made of metal, while the piston 4 is advantageously made of self-lubricating material such as Teflon®.

A preferred way to use the invention involves air supply means consisting of a vacuum unit 10 comprising basically a vacuum pump 14, an electric motor 15, an intake manifold 11a and a delivery manifold 11 m.

The intake manifold 11a and delivery manifold 11b are connected to the chamber containing the filter F respectively by means of a conduit 12a and a conduit 12m; the vacuum unit 10 includes other conduits 13a and 13m for external intake and delivery. These conduits are equipped with valves 16, for example of the slide type.

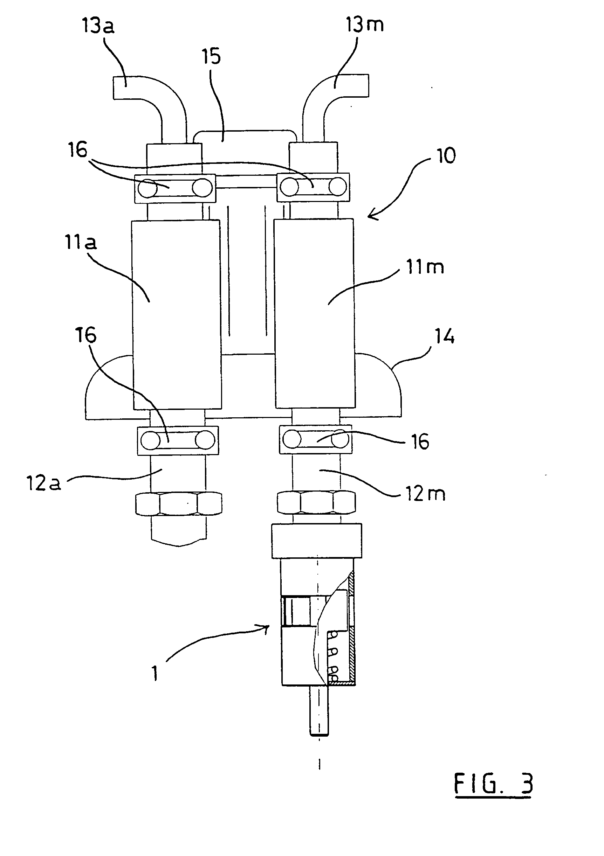

As illustrated in Fig. 3, the device 1 is connected to the delivery manifold 11 m downstream of the respective valve 16, by suitable known connection means between the sleeve 2 and the outlet of the conduit 12m.

The device may also be used in the same way with other means generating the air flow A, including for example a vacuum unit different from the one shown, or even a compressed air plug connectable to an external compressor.

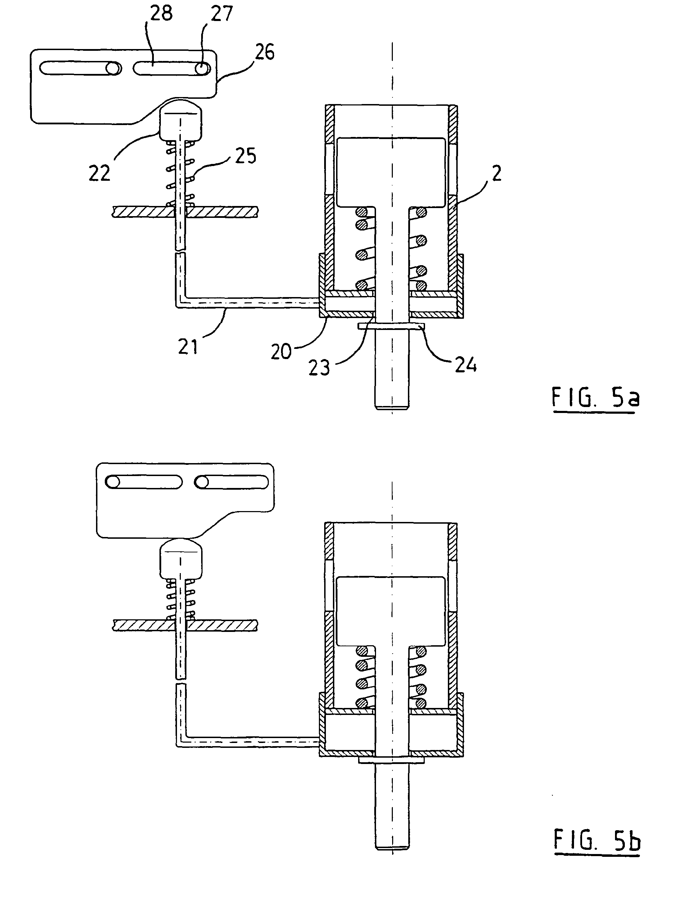

The deactivation system illustrated in Figs. 5a and 5b makes it possible to lower the piston 4 leaving the air vents 3 at least partially open, thus allowing air flow A to be discharged through the device 1 into the chamber containing the filter F.

More particularly, said deactivation system includes an external sleeve 20 connected to the sleeve 2, so that said external sleeve 20 can slide over said sleeve 2; the external sleeve 20 is then connected by a rigid rod 21 to a control handle 22.

The external sleeve 20 has a bottom hole 23 for the shank 6, this last featuring an annular surface with a diameter greater than that of said hole 23; said annular surface is obtained, for example, with a Seeger ring 24.

The control handle 22 is operated by means of a cursor 26 associated to the body of the vacuum cleaner in a sliding way by means of pins 27 inserted into slots 28.

The cursor 26 has a lower face in contact with the control handle 22, shaped with two substantially flat surfaces having different heights and joined by an inclined section, providing stable backing rests for said handle 22.

Advantageously a return spring 25 for the control handle 22 is also provided.

According to the invention, to operate the device 1 the operator supplies the compressed air flow A to the sleeve 2, by means of the compressed air supply means connected to the device.

Referring in particular to the example of Fig. 3, the operator sets the valves 16, closing the valves located on the conduits 12a and 13m and opening the other valves, then starts the vacuum unit 10. Valves 16 enable the vacuum pump 14 to suck air from outside through conduit 13a and pump it into conduit 12m to which the sleeve 2 is connected.

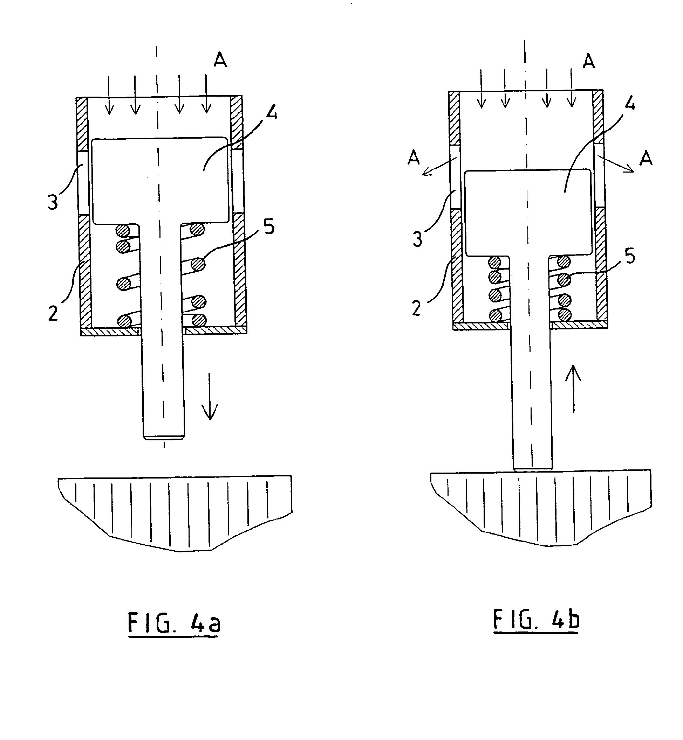

The compressed air flow A thus generated pushes the piston 4 downwards as in Fig. 4a.

Moving downwards, the piston 4a compresses the spring 5 and causes air vents 3 to open, as illustrated in Fig. 4b. By opening the air vents 3, the air flow A is discharged through them, the pressure on the head of the piston 4 decreases and, as a consequence, the piston rises again by the pushing action of the spring 5. The upwards movement of the piston 4 re-closes the vents 3 and this immediately causes the pressure in the sleeve 2 to increase, thus giving a new downwards force acting on the piston itself.

This results in a rapid, reciprocating movement of the piston 4 which, through the shank 6, produces the desired effect of shaking the filter F.

Referring now to the deactivation system of Figs. 5a and 5b, in the position of Fig. 5a the piston 4 is free and the device 1 works as described previously.

With the cursor 26 moved to the position of Fig. 5b, the contact between the handle 22 and the shaped lower face of the cursor 26 causes the handle 22 and the sleeve 20 rigidly connected to it to move downwards.

The sleeve 20 also drags the piston 4, due to the presence of the ring 24, and moves it to the position of Fig. 5b, in which the air vents 3 are partially open.

In the position of Fig. 5b the device 1 is deactivated because the air flow A entering the sleeve 2 is discharged through the vents 3 and cannot cause the piston 4 to move. Furthermore, with the device 1 thus deactivated the user can pass compressed air into the filter chamber or into the container of the material sucked out, for example to pressurise the container and remove oil or liquids that may have accumulated.

Details like materials, shapes and dimensions can be replaced with others technically equivalent or vary depending on the need, but without circumventing the purpose of protection of the claims.

## Claims

1. A pneumatic filter-shaking device (1) for a filter (F) of a vacuum cleaner, **characterised in that** it comprises a sleeve (2), connectable to means (10) for supplying a compressed air flow (A) and fitted with at least one air discharge vent (3), and a piston (4) sliding inside said sleeve (2), connected to elastic return means (5) and provided with a shank (6) extending beyond the end of said sleeve (2), wherein said piston (4), when moving with a reciprocating motion inside said sleeve (2), causes the opening and closing of said at least one air discharge vent (3) and also causes the shaking of the filter (F) through said shank (6).

2. A device according to claim 1, **characterised in that** said piston (4) is made of self-lubricating material.

3. A device according to claim 1, **characterised in that** said elastic return means comprise a spring (5), coaxial to the shank (6) of the piston (4), whose resting surfaces are the piston head (4) and a bottom element (7) fixed to the end of the sleeve (2).

4. A device according to claim 1, **characterised in that** it is provided with a deactivation system that enables to lower said piston (4), leaving said air discharge vents (3) at least partially open.

5. A device according to claim 4, **characterised in that** said deactivation system comprises an external sleeve (20), coaxial to the shank (6) of the piston 4, which drags the piston (4) cooperating with an annular surface (24) fixed to said shank (6) of the piston (4).

6. A device according to claim 5, **characterised in that** said sleeve (20) is rigidly connected to a control handle (22) that can be operated by means of a sliding cursor (26) whose lower face is in contact with the control handle (22) and is profiled with two substantially flat surfaces located at different heights and joined by an inclined section, that provide stable backing rests for said handle (22).

7. A vacuum cleaner provided with at least one filter (F), **characterised in that** it includes a filter-shaking device (1) according to at least one of the preceding claims.

8. A vacuum cleaner according to claim 7, **characterised in that** it is provided with a vacuum unit (10) which includes:
- a vacuum pump (14) driven by a motor (15);
- an intake manifold (11a) and a delivery manifold (11m) for compressed air;
- vacuum and delivery conduits (12a, 12m) in a chamber containing the filter (F) and external conduits (13a, 13m), connected to said manifolds (11a, 11m) and provided with valves (16);
in which the filter-shaking device (1) is connected to the outlet of the compressed air delivery conduit (12m), leading from the respective manifold (11m) to the chamber containing the filter (F).

## Patentansprüche

1. Pneumatische Filterrüttlervorrichtung (1) für einen Filter (F) eines Staubsaugers, **dadurch gekennzeichnet, dass** sie eine Muffe (2) umfasst, die an Geräte (10) zur Druckluftspeisung (A) angeschlossen werden kann und mit mindestens einer Luftablassöffnung (3) versehen ist, und einen Kolben (4), verschiebbar in der genannten Muffe (2), verbunden mit Geräten zur elastischen Rückführung (5) und versehen mit einem Schaft (6), der über den abschließenden Abschnitt der genannten Muffe hinausgeht (2), in der der genannte Kolben (4), mittels seiner Hin- und Herbewegung in der Muffe (2), das Öffnen und Schließen von mindestens einer der genannten Luftablassöffnungen (3) verursacht und außerdem das Schütteln des Filters (F) mittels des genannten Schafts (6).

2. Vorrichtung gemäß Anspruch 1, **dadurch gekennzeichnet, dass** der genannte Kolben (4) aus selbstschmierendem Material hergestellt ist.

3. Vorrichtung gemäß Anspruch 1, **dadurch gekennzeichnet, dass** die genannten Geräte zur elastischen Rückführung eine Feder (5), koaxial zum Schaft (6) des Kolbens (4) umfassen, deren Anschlagflächen aus dem Kopf des genannten Kolbens (4) bestehen und aus einer Bodenscheibe (7), die am abschließenden Abschnitt der Muffe (2) befestigt ist.

4. Vorrichtung gemäß Anspruch 1, **dadurch gekennzeichnet, dass** sie über ein Deaktivierungssystem verfügt, das das Absenken des Kolbens (4) gestattet, wobei die Öffnungen (3) für den Luftablass (A) zumindest teilweise offen bleiben.

5. Vorrichtung gemäß Anspruch 4, **dadurch gekennzeichnet, dass** das genannte Deaktivierungssystem eine Muffe (20), koaxial zum Schaft (6) des Kolbens (4) umfasst, die dazu da ist, den Kolben (4) mitzuziehen, wobei mit einer ringförmigen Anschlagfläche (24) zusammengearbeitet wird, die an dem genannten Schaft (6) des Kolbens (4) befestigt ist.

6. Vorrichtung gemäß Anspruch 5, **dadurch gekennzeichnet, dass** die genannte Muffe (20) fest mit einem Steuerdrehknopf (22) verbunden ist, der mit einem verschiebbaren Läufer (26) betätigt werden kann, dessen untere Seite mit dem Steuerdrehknopf in Kontakt (22) und aus zwei im wesentlichen flachen Teilen geformt ist, die sich auf verschiedenen Ebenen befinden und durch einen geneigten Abschnitt verbunden sind, die stabile Auflagen für den genannten Drehknopf (22) darstellen.

7. Staubsauger, der mit zumindest einem Filter (F) versehen ist, **dadurch gekennzeichnet, dass** er eine Filterrüttlervorrichtung (1) entsprechend einer oder mehrerer der vorausgehenden Ansprüche umfasst.

8. Staubsauger gemäß Anspruch 7, **dadurch gekennzeichnet, dass** er über ein Ansaugaggregat (10) verfügt, das das Folgende umfasst:
- eine von einem Motor (15) betätigte Vakuumpumpe (14);
- einen Ansaugkrümmer (11a) und einen Auslasssammler (11m) der Druckluft;
- Ansaug- und Auslassleitungen (12a, 12m) in die den Filter (F) enthaltende Kammer und externe Leitungen (13a, 13m), die mit den genannten Sammlern (11a, 11m) verbunden sind und über Ventile(16) verfügen;
in dem die Filterrüttlervorrichtung (1) an die Mündung der Auslassleitung (12m) der Druckluft vom jeweiligen Sammler (11m) zur den Filter (F) enthaltenden Kammer angeschlossen ist.

## Revendications

1. Dispositif secoue-filtre pneumatique (1) pour un filtre (F) d'aspirateur, **caractérisé par le fait qu'**il comprend un manchon (2), pouvant être raccordé sur des dispositifs (10) d'alimentation d'air comprimé (A) et muni d'au moins une ouverture (3) d'évacuation de l'air, et un piston (4) coulissant dans dit manchon (2), associé à des dispositifs de rappel élastique (5) et muni de pied (6) qui se détend au-delà de la section terminale de dit manchon (2), où dit piston (4), grâce à son mouvement alternatif dans le manchon (2), provoque l'ouverture et la fermeture de dite au moins une ouverture (3) d'évacuation de l'air et provoque en outre le secouage du filtre (F) par l'intermédiaire de dit pied (6).

2. Dispositif selon la revendication 1 **caractérisé par le fait que** dit piston (4) est réalisé en matériau autolubrifiant.

3. Dispositif selon la revendication 1, **caractérisé par le fait que** dits dispositifs de rappel élastique comprennent un ressort (5), coaxial au pied (6) du piston (4), dont les plans de butée sont réalisés par la tête de dit piston (4) et par un culot (7) fixé sur la section terminale du manchon (2).

4. Dispositif selon la revendication 1, **caractérisé par le fait qu'**il est muni d'un système de désactivation, permettant d'abaisser le piston (4) en laissant ouvertes, au moins partiellement, les ouvertures (3) d'évacuation de l'air (A).

5. Dispositif selon la revendication 4, **caractérisé par le fait que** dit système de désactivation comprend un manchon (20), coaxiale au pied (6) du piston (4), en mesure d'entraîner le piston (4), en coopérant avec un plan de butée en anneau (24) fixé sur dit pied (6) du piston (4).

6. Dispositif selon la revendication 5, **caractérisé par le fait que** dit manchon (20) est raccordée rigidement sur un pommeau de commande (22), actionnable à l'aide d'un curseur coulissant (26) dont la face inférieure est en contact avec le pommeau de commande (22) et dont le profil est formé par deux portions pratiquement plates, placées sur deux niveaux différents et raccordées par un tronçon incliné, qui forment des appuis stables pour le dit pommeau (22).

7. Aspirateur muni d'au moins un filtre (F), **caractérisé par le fait qu'**il comprend un dispositif secoue-filtre (1) selon une ou plusieurs des revendications précédentes.

8. Aspirateur selon la revendication 7, **caractérisé par le fait qu'**il est équipé d'un groupe aspirant (10), comprenant :
- une pompe à vide (14) actionnée par un moteur (15) ;
- un collecteur d'aspiration (11a) et un collecteur de refoulement (11m) de l'air comprimé ;
- des conduits d'aspiration et de refoulement (12a, 12m) dans la chambre contenant le filtre (F) et des conduits extérieurs (13a, 13m), raccordés sur dits collecteurs (11a, 11m) et munis de soupapes (16) ;
où le dispositif secoue-filtre (1) est raccordé sur la goulotte du conduit (12m) de refoulement de l'air comprimé par son collecteur (11m) sur la chambre contenant le filtre (F).
